# DEMANDE DE BREVET EUROPEEN

(11) **EP 4 195 152 A1**
(43) Date de publication de la demande: **14.06.2023**
(21) Numéro de dépôt: 22212448.9
(22) Date de dépôt: 09.12.2022
(51) Int. Cl.: G06T 7/579, G06V 10/40

(54) **CAMÉRA, SYSTÈME DE VISION PAR ORDINATEUR INTÉGRANT UNE TELLE CAMÉRA ET FLUX DE DONNÉES GÉNÉRÉ PAR UNE TELLE CAMÉRA**

(30) Priorité: 10.12.2021 FR 2113308
(71) Demandeur: Commissariat à l'énergie atomique et aux énergies alternatives, 75015 Paris (FR)
(72) Inventeur: CHEVOBBE, Stéphane, 91191 GIF SUR YVETTE CEDEX (FR); DAROUICH, MEHDI, 91191 GIF SUR YVETTE CEDEX (FR)
(74) Mandataire: Lavoix

(57) **Abrégé**

Cette caméra (10) comporte : un capteur (12) pour acquérir une séquence d'images à une fréquence d'acquisition ; un module de suivi (14) pour traiter à la volée chaque image acquise afin de suivre un ensemble de points depuis une image de référence et, lorsqu'un critère sur le nombre de points suivis n'est plus respecté, en sélectionnant l'image courante en tant que nouvelle image de référence pour le suivi des images suivantes ; un module de transmission (16) pour générer un flux de données, commandé par le module de suivi (14) afin d'intégrer dans le flux de données, uniquement les images sélectionnées comme image de référence ; et une interface d'entrée/sortie (18) pour recevoir le flux de données généré par le module de transmission et le transmettre à un calculateur (20), la caméra (10) transmettant ainsi des images avec une fréquence de transmission d'image variable, inférieure à la fréquence d'acquisition.

## Description

La présente invention a pour domaine celui des dispositifs de capture d'images, notamment pour des systèmes de vision par ordinateur.

Pour effectuer la fonction d'égo-localisation, les systèmes de vision par ordinateur connus utilisent une ou plusieurs caméras, en tant que dispositif de capture d'images, reliées(s) à un processeur de calcul.

L'égo-localisation est fondée sur la capture des mouvements de la caméra à partir de la détection des déplacements de la scène observée d'une image à l'autre de la séquence d'images acquises par la caméra.

Les images acquises par la caméra sont transmises en flux au processeur pour effectuer les calculs de la fonction d'égo-localisation. Ceci est par exemple décrit dans l'article SANFOURCHE M. et al., "eVO: A realtime embedded stereoodometry for MAV applications", 2013 IEEE/RSJ INTERNATIONAL CONFERENCE ON INTELLIGENT ROBOTS AND SYSTEMS(ROS), IEEE, 3 novembre 2013 (2013-11-03), pages 2107-21 14, ou encore dans la demande de brevet US 2016/179830 A1.

Une telle fonction nécessitant une fréquence d'acquisition d'image élevée, le flux de données transmis de la caméra au processeur sollicite fortement l'interface d'entrée/sortie de la caméra, ce qui engendre une surconsommation énergétique du système de vision par ordinateur regroupant la caméra et le processeur.

Ceci est vrai non seulement lorsque la liaison entre la caméra et le processeur est du type sans fil (connexion selon la norme Bluetooth par exemple), mais également lorsque cette liaison est du type filaire (connexion selon la norme USB par exemple).

Ce problème de surconsommation est aggravé lorsque l'on cherche à augmenter les performances des capteurs d'image employés par la caméra, notamment en augmentant la fréquence d'acquisition d'image et/ou la résolution des images acquises, dans le but d'améliorer la qualité de la capture des mouvements de la caméra.

Ce problème de surconsommation est critique dans certaines applications, comme par exemple pour des systèmes de vision par ordinateur embarqués sur des plateformes autonomes (drone aérien par exemple), où la question de l'autonomie est cruciale.

Le but de cette invention est de résoudre ce problème.

Pour cela l'invention a pour objet une caméra comportant : un capteur optique, capable d'acquérir une séquence d'images, avec une fréquence d'acquisition d'image prédéfinie et constante ; un module de suivi, capable de traiter à la volée chaque image acquise de la séquence d'images pour suivre un ensemble d'éléments caractéristiques depuis une image de référence et, lorsqu'un critère sur le nombre d'éléments caractéristiques suivis n'est plus respecté, en sélectionnant l'image courante en tant que nouvelle image de référence pour le suivi des images suivantes ; un module de transmission capable de générer le flux de données, le module de transmission étant commandé par le module de suivi de manière à intégrer dans le flux de données uniquement les images de la séquence d'images qui ont été sélectionnées comme image de référence par le module de suivi ; et une interface d'entrée/sortie, propre à recevoir le flux de données généré par le module de transmission et destinée à transmettre ledit flux de données à un calculateur, la caméra transmettant des images avec une fréquence de transmission d'image variable, inférieure ou égale à la fréquence d'acquisition d'image.

Suivant des modes particuliers de réalisation, la caméra comporte une ou plusieurs des caractéristiques suivantes, prises isolément ou suivant toutes les combinaisons techniquement possibles :
- le module de suivi est propre à générer un indicateur pour chaque image, indicatif de si oui ou non ladite image est une image de référence, et à transmettre ledit indicateur au module de transmission, le module de transmission filtrant les images de la séquence d'images en fonction de la valeur de l'indicateur pour ne conserver que les images sélectionnées comme images de référence ;
- le traitement par le module de suivi d'une image acquise consiste, en outre, à calculer une signature pour chaque élément caractéristique détecté dans l'image acquise ;
- le module de suivi génère, pour chaque image acquise, une liste de signatures comportant les signatures des éléments caractéristiques détectées dans ladite image acquise et applique ladite liste de signatures en entrée du module de transmission, le module de transmission étant capable d'intégrer, dans le flux de données, la liste de signatures pour chaque image acquise ;
- le module de suivi génère, pour chaque image acquise, une liste de signatures comportant les signatures des éléments caractéristiques détectés dans ladite image acquise et applique ladite liste de signatures en entrée du module de transmission, le module de transmission étant capable d'intégrer, dans le flux de données, uniquement la liste de signatures des images de la séquence d'images qui ont été sélectionnées comme image de référence par le module de suivi ;
- le module de suivi génère, pour chaque image acquise, une liste de suivi comportant les éléments caractéristiques détectées dans l'image courante et leur appariement éventuel à un élément caractéristique d'une image précédente, et applique ladite liste de suivi en entrée du module de transmission, le module de transmission étant capable d'intégrer, dans le flux de données, la liste de suivi pour chaque image acquise ;
- le traitement par le module de suivi d'une image acquise consistant, en outre, à calculer une signature pour chaque élément caractéristique détecté dans l'image acquise, l'appariement des éléments caractéristiques de l'image courante avec des éléments caractéristiques d'une image précédente s'effectue en tenant compte des signatures des éléments caractéristiques de l'image courante et des signatures des éléments caractéristiques de l'image précédente ;
- l'interface d'entrée/sortie permet d'établir une liaison sans fil ou une liaison filaire avec le calculateur ;
- le module de suivi et/ou le module de transmission est intégré à un accélérateur matériel, de préférence un circuit intégré dédié ; et
- le critère sur le nombre d'éléments caractéristiques est ajustable, de préférence lors de la réception d'une commande émise par le calculateur.

L'invention a également pour objet un système de vision par ordinateur comportant une caméra, conforme à la caméra précédente, et un calculateur, qui sont reliés l'un à l'autre par une liaison, sans-fil ou filaire.

L'invention a également pour objet un flux de données entre une caméra et un calculateur dans un système de vision par ordinateur conforme au système précédent, le flux de données étant subdivisé en pas de temps, la durée d'un pas de temps correspondant à la période d'acquisition d'images par le capteur optique de la caméra, chaque pas de temps correspondant à une image acquise, le flux de données pour un pas de temps comportant les données de l'image acquise correspondante, mais uniquement lorsque ladite image est une image de référence telle que déterminée par le module de suivi.

De préférence, les données du flux de données pour un pas de temps comporte la liste de signatures des signatures des éléments caractéristiques de l'image acquise correspondante, mais uniquement lorsque ladite image est une image de référence.

Alternativement, les données du flux de données pour un pas de temps comporte la liste de signatures des signatures des éléments caractéristiques de l'image acquise correspondante et/ou la liste de suivi des éléments caractéristiques de l'image acquise correspondante.

De préférence encore, les données du flux de données pour un pas de temps comporte la liste de suivi des éléments caractéristiques de l'image acquise correspondante.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
[Fig 1] La figure 1 est une représentation schématique d'un mode de réalisation préféré d'un système de vision par ordinateur selon l'invention ; et,
[Fig 2] La figure 2 est une représentation du flux de données généré par la caméra du système de vision par ordinateur de la figure 1.

La caméra selon l'invention réalise les traitements bas niveau de capteur des mouvements de la caméra, et exploite les résultats de ces traitements pour optimiser le flux de données transmis par la caméra au processeur. Le processeur quant à lui réalise les traitements haut niveau de capture du mouvement de la caméra à partir du flux de données optimisé.

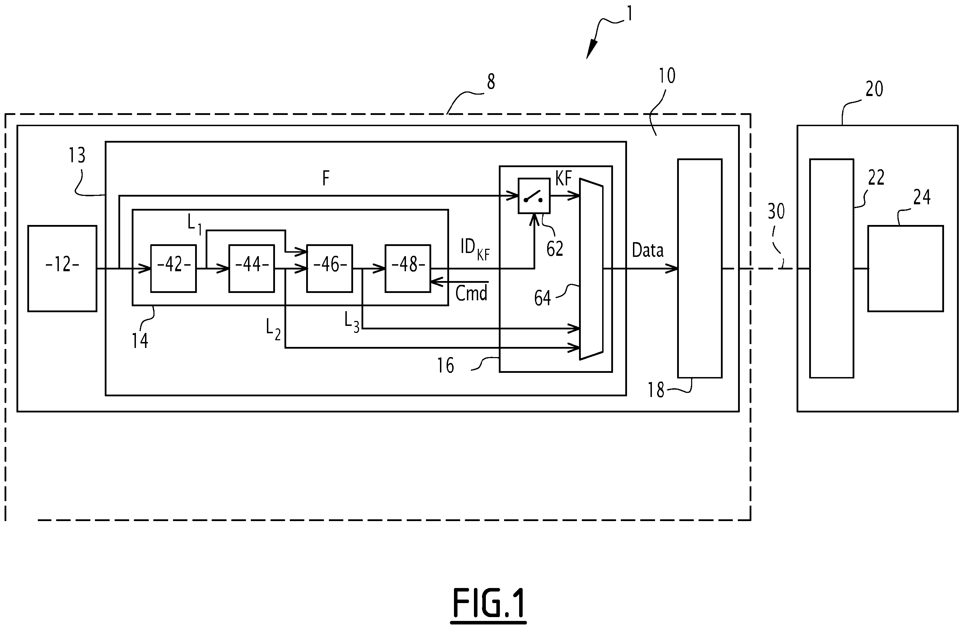

La figure 1 représente un système de vision par ordinateur, destiné par exemple à équiper un robot mobile.

Le système de vision par ordinateur 1 comporte un dispositif de capture d'images 8, un calculateur déporté 20, et une liaison de communication 30 entre le dispositif de capture d'images 8 et le calculateur 20.

Le dispositif de capture d'images 8 comporte une caméra 10. En variante, il comporte plusieurs caméras.

Le calculateur 20 est déporté. Il comporte une interface d'entrée/sortie 22 et un processeur 24. Ce dernier est programmé pour mettre en œuvre différentes fonctionnalités, notamment une fonctionnalité d'égo-localisation (plus précisément, les traitements haut niveau de la fonction d'égo-localisation), à partir des données reçues du dispositif de capture d'image 8 via la liaison de communication 30.

La caméra 10 comporte un capteur 12, un dispositif de calcul 13, et une interface d'entrée/sortie 18.

Le capteur 12 est par exemple un capteur optique. Il est propre à observer une scène et à générer une séquence d'images avec une fréquence d'acquisition d'image, Fi, prédéfinie et constante.

Le capteur 12 comporte par exemple une optique et une puce de capture d'image. L'optique permet de faire converger sur la puce de capture d'image, les rayons lumineux émis ou réfléchis par les objets présents dans la scène observée par la caméra. La lecture périodique des charges accumulées dans les pixels de la puce de capture d'image permet de générer une image (ou « frame »), F, à chaque pas de temps d'échantillonnage.

Le dispositif de calcul 13, qui est du type « proche capteur », est de préférence un accélérateur matériel, comme par exemple un circuit intégré propre à une application - ASIC (« Application Specific Integrated Circuit »).

Le dispositif de calcul 13 intègre un module de suivi 14 et un module de transmission 16.

Le dispositif de calcul 13 traite à la volée chaque image de la séquence d'images délivrée par le capteur 12. Dans ce qui suit, on considère que le dispositif de calcul effectue un traitement en temps réel de chaque image, sans introduction d'une latence. En toute rigueur il faudrait considérer un tel délai.

Le traitement réalisé par le module de suivi 14 consiste à détecter, dans une image délivrée par le capteur 12, une pluralité d'éléments caractéristiques des objets observés, à générer une description de chaque élément caractéristique détecté, et à suivre d'une image à l'autre (c'est-à-dire dans le temps) les éléments caractéristiques détectés.

Par exemple, dans le mode de réalisation représenté sur la figure 1, le module de suivi 14 comporte quatre blocs.

Le premier bloc 42, ou bloc de détection, prend en entrée une image dite courante de la séquence d'images délivrée par le capteur 12. Le premier bloc 42 détecte dans l'image courante des éléments caractéristiques ou points clefs (« key points » en anglais). Par exemple, un élément caractéristique est constitué par le coin d'un objet observé, ou un point de contour d'un objet observé. Chaque élément caractéristique est par exemple défini par :
- un identifiant du pas de temps d'échantillonnage (c'est-à-dire un identifiant de l'image courante analysée),
- un identifiant de l'élément caractéristique parmi les différents éléments caractéristiques détectés dans l'image courante,
- les deux coordonnées de l'élément caractéristique dans l'image courante, et
- une étiquette correspond à un type dont relève l'élément caractéristique détecté (coin, contour, groupe de points, etc.).

Plusieurs méthodes d'extraction d'éléments caractéristique sont connues comme les méthodes dites « Harris », « FAST », « SURF », « SIFT », ou encore les méthodes fondées sur des réseaux de neurones, notamment convolutionnels (« Convolutional Neural Network » - CNN).

Le premier bloc 42 génère, pour l'image courante, une première liste L₁ des éléments caractéristiques détectés dans l'image courante. Cette première liste L₁ est donc générée à la fréquence d'acquisition d'image, Fᵢ.

Le deuxième bloc 44, ou bloc de description, calcule la signature de chaque élément caractéristique détecté dans l'image courante par le premier bloc 42, c'est-à-dire chaque élément caractéristique indiqué dans la première liste L₁ reçue du premier bloc 42.

Une signature est par exemple un vecteur rassemblant une pluralité de descripteurs de l'élément caractéristique, comme par exemple une position dans l'image, une couleur, une intensité, le résultat d'un filtrage sur un voisinage local (par exemple basé sur un histogramme des gradients verticaux et horizontaux dans des quadrants de voisinage autour de l'élément caractéristique considéré), etc.

La signature d'un élément caractéristique est avantageusement invariable de manière à permettre un suivi de l'élément caractéristique d'une image à l'autre.

Il existe plusieurs méthodes connues qui mettent en œuvre une description d'un élément caractéristique par une signature comme les méthodes dites « BRIEF », « SURF », « SIFT », ou CNN, etc.

Le second bloc 44 génère, pour l'image courante, une seconde liste L₂ regroupant les signatures de chacun des éléments caractéristiques détectés dans l'image courante. Cette seconde liste L₂ est générée à la fréquence d'acquisition d'image Fᵢ.

Elle constitue une première sortie du module de suivi 14.

Le troisième bloc 46, ou bloc de suivi (« tracker » en anglais), permet de réaliser un suivi entre les éléments caractéristiques détectés dans l'image courante F(Tⱼ) par le premier bloc 42 (tels qu'indiqués dans la première liste L₁ pour l'image courante) et les éléments caractéristiques détectés dans une image précédente F(Tⱼ₋₁) (tels qu'indiqués dans la première liste L₁ pour l'image précédente F(Tⱼ₋₁)).

L'image précédente F(Tⱼ₋₁) est l'image au pas de temps d'échantillonnage Tⱼ₋₁ qui précède le pas de temps d'échantillonnage Tⱼ de l'image courante F(Tⱼ).

Le suivi est effectué soit par une approche directe, comme par exemple en employant l'algorithme de Kanade-Lucas-Tomasi (KLT) ou un algorithme de flot optique, soit par appariement des signatures des éléments caractéristiques de l'image courante F(Tⱼ) (telles qu'indiquées dans la seconde liste L₂ pour l'image courante) et celles des éléments caractéristiques de l'image précédente F(Tⱼ₋₁) (telles qu'indiquées dans la seconde liste L₂ pour l'image courante).

Le second bloc 44 génère, pour l'image courante, une troisième liste L₃. La troisième liste L₃ pour l'image courante F(Tⱼ) reprend les informations de la première liste L₁ de l'image courante F(Tⱼ) avec, pour chaque élément caractéristique de l'image courante F(Tⱼ) qui a été suivi depuis l'image précédente F(Tⱼ₋₁), l'identifiant de cet élément caractéristique dans la première liste L₁ de l'image précédente F(Tⱼ₋₁).

La troisième liste L₃ constitue une seconde sortie du module de suivi 14.

Le quatrième bloc 48, ou bloc de sélection, est responsable de la sélection d'une image courante F(Tⱼ) en tant qu'image de référence. Une image de référence est également dénommée « image clef » (« key frame » en anglais). Elle est notée KF.

Par exemple, ce quatrième bloc 48 sélectionne d'abord une image de la séquence d'images en tant qu'image de référence KFₖ et mémorise la première liste L₁ des éléments caractéristiques de cette image de référence dans une quatrième liste.

Puis, pour chaque image courante F(Tⱼ) qui suit l'image de référence KFₖ, le quatrième bloc 48 vérifie qu'un élément caractéristique de l'image de référence KFₖ, qui a été suivi depuis l'image de référence KFₖ jusqu'à l'image précédente F(Tⱼ₋₁), a été également suivi entre l'image précédente F(Tⱼ₋₁) et l'image courante F(Tⱼ).

Dans l'affirmative, cet élément caractéristique est conservé dans la quatrième liste, et, dans la négative, il est éliminé de la quatrième liste. Le quatrième bloc 48 utilise ici la troisième liste L₃ qui indique notamment les éléments caractéristiques qui ont été suivis entre l'image précédente F(Tⱼ₋₁) et l'image courante F(Tⱼ) par le troisième bloc 46.

Puis, le quatrième bloc 48 vérifie un critère sur la quatrième liste. Par exemple, le critère consiste à vérifier que le nombre d'éléments caractéristiques dans la quatrième liste est supérieur ou égal à un seuil prédéfini. Dès que le nombre d'éléments caractéristiques dans la quatrième liste est inférieur audit seuil, alors l'image courante F(Tⱼ), est sélectionnée en tant que nouvelle image de référence KFₖ₊₁. La quatrième liste est alors réinitialisée avec la première liste L₁ associée à cette nouvelle image de référence KFₖ₊₁. Pour les images suivantes, la contrainte sur le suivi des éléments caractéristiques se calculera par rapport à cette nouvelle image de référence KFₖ₊₁.

Le quatrième bloc 48 associe à chaque image F un indicateur binaire, Id_{KF}, indiquant si oui ou non cette image est une image de référence.

Cet identifiant constitue une troisième sortie du module de suivi 14.

La période entre deux images de référence consécutives, KFₖ₊₁ et KFₖ₊₁, dépend de nombreux facteurs, notamment de la rapidité du mouvement de la caméra (plus la vitesse de la caméra est importante, plus la période est courte), de la nature du mouvement de la caméra (à vitesse équivalente, un mouvement de rotation conduit à une perte plus rapide des éléments caractéristiques à suivre qu'un mouvement de translation), de la proximité des objets la scène observée (plus un objet est proche, plus il est difficile à suivre car les éléments caractéristiques associés vont plus rapidement disparaitre du champ de vue de la caméra en cas de rotation ou même translation.), des conditions lumineuses (par exemple une faible luminosité limite la capacité de détection d'éléments caractéristiques et la période entre deux images de référence est réduite), etc.

En variante, notamment lorsque le troisième bloc de suivi 46 n'emploie pas les signatures pour apparier les éléments caractéristiques des images courante et précédente, le deuxième bloc 44 de description est mis en œuvre uniquement pour décrire les éléments caractéristiques des images de référence. Dans ce cas, la seconde liste L₂ est générée à la fréquence des images de référence et non plus à la fréquence des images acquises.

De préférence, le module de suivi mis en œuvre par la présente caméra est une adaptation du module présenté dans l'article M. Lepecq and M. Darouich, "A Stream Hardware Architecture for Keypoint Matching Based on a Spéculative Approach," 2020 IEEE International Symposium on Circuits and Systems (ISCAS), 2020, pp. 1-5, doi: 10.1109/ISCAS45731.2020.9180928. Ce module de l'état de la technique est modifié en ajoutant le quatrième bloc permettant la sélection d'images de référence dans la séquence des images acquises. De plus, le module de suivi est ici adapté pour délivrer, en sortie, une seconde liste des signatures des éléments caractéristiques de chaque image acquise ou de chaque image de référence, une troisième liste des éléments caractéristiques de chaque image acquise et, pour chaque élément caractéristique, si cet élément caractéristique a été apparié avec un élément caractéristique de l'image précédente, ainsi qu'un indicateur d'image de référence indiquant si oui ou non l'image acquise est une image de référence.

Ces trois informations, ainsi que la séquence d'images acquises sont appliquées en entrée du module de transmission.

Le module de transmission 16 est adapté pour générer le flux de données, Data, que l'interface d'entrée/sortie aura à transmettre le long de la liaison 30 (conformément au protocole de communication mis en œuvre pour la communication) vers le calculateur 20.

Dans le mode de réalisation de la figure 1, le module de transmission 16 comporte par exemple un interrupteur commandé 62 et un multiplexeur 64.

L'interrupteur commandé 62 est interposé entre l'entrée du module de transmission, qui reçoit la séquence d'images, et le multiplexeur 64. L'interrupteur 62 est commandé par l'indicateur d'image de référence, Id_{KF}, délivré par le module de suivi 14. Par exemple, si l'indicateur d'image de référence Id_{KF} prend la valeur nulle, l'interrupteur commandé 62 ne transmet pas l'image courante F vers le multiplexeur 64. Si en revanche l'indicateur d'image de référence Id_{KF} prend la valeur unité, l'interrupteur commandé 62 transmet l'image courante F (qui est une image de référence KF) de la séquence d'images au multiplexeur 64.

A chaque pas d'échantillonnage, le multiplexeur 64 combine les données suivantes pour élaborer le flux de données, Data :
- les données relatives à la troisième liste L₃ de l'image courante, telle que délivrée par le module de suivi 14 ;
- les données relatives à la seconde liste L₂ de l'image courante, telle que délivrée par le module de suivi 14 ; et,
- les données relatives à l'image courante, à condition seulement que cette image soit une image de référence, telles que filtrées par l'interrupteur 62.

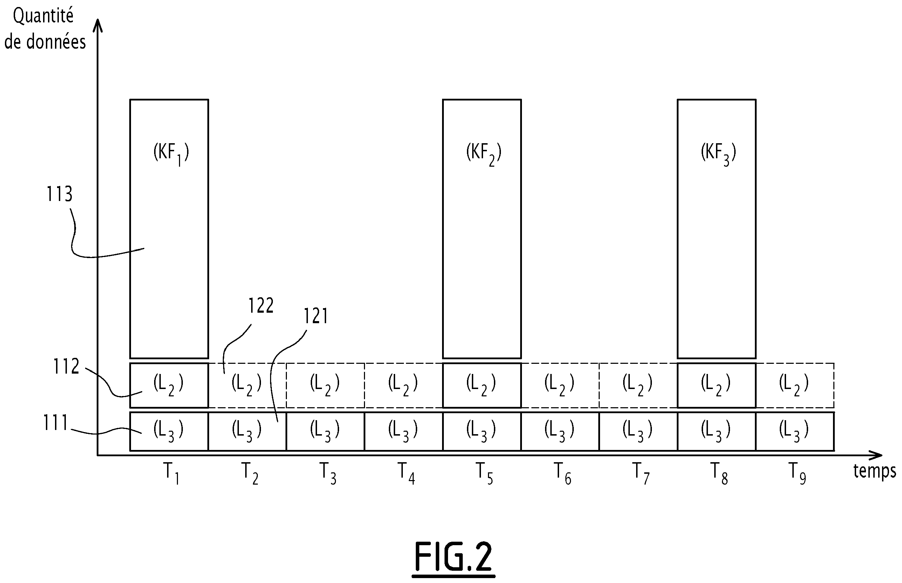

Par exemple sur la figure 2, au pas d'échantillonnage T₁, l'image courante reçue par le module de transmission 16 est étiquetée par l'identifiant Id_{KF} comme une image de référence KF₁. En conséquence, le flux de données Data comporte, pour ce pas d'échantillonnage, les données 111 de la troisième liste L₃ associée à cette image, les données 112 de la seconde liste L₂ associée à cette image, et les données 113 de cette image.

En revanche, au pas d'échantillonnage T₂, l'image courante reçue par le module de transmission 16 est étiquetée par l'identifiant Id_{KF} comme n'étant pas une image de référence. En conséquence, le flux de données, Data, comporte, pour ce pas d'échantillonnage, uniquement les données 121 de la troisième liste L₃ associée à cette image et les données 122 de la seconde liste L₂ associée à cette image.

Ainsi, le flux de données Data appliqué à l'interface d'entrée/sortie 18 de la caméra, comporte uniquement les images de la séquence d'images qui ont été sélectionnées comme image clef (KF₁, KF₂ et KF₃ sur la figure 2), en plus des données de description des éléments caractéristiques de chaque image de la séquence d'images suite aux traitement bas-niveau effectués par le module de suivi 14.

Dans la variante où le module de suivi 14 génère la seconde liste L₂ uniquement pour les images de référence, le flux de données produit diffère par conséquent en ce que, pour un pas d'échantillonnage où l'image acquise n'est pas une image de référence, il n'y a pas de données correspondant aux signatures des éléments caractéristiques de cette image, cette information étant en revanche présente dans le flux de données pour un pas d'échantillonnage où l'image acquise est une image de référence. Ceci est indiqué sur la figure 2 par l'utilisation de traits pointillés.

Dans une autre variante, alors que l'on dispose des données de description des images qui ne sont pas de référence, ces informations sont mises de côté par l'interrupteur commandé du module de transmission, et elles ne sont pas incluses dans le flux de données.

Dans encore une autre variante, les signatures sont calculées pour chaque image, mais uniquement utilisées pour apparier les éléments caractéristiques d'une image à l'autre pour réaliser le suivi. La seconde liste des signatures est alors utilisée à l'intérieur du module de suivi 14, mais ne constitue pas une sortie de ce module. Les signatures ne sont alors pas incluses dans le flux de données transmis au calculateur.

La fréquence des images de référence n'est pas constante. C'est ce qui est illustré sur la figure 2, où les pas d'échantillonnage T₁, T₄ et T₇ correspondent à des images de référence successives.

La caméra 10 transmet donc au calculateur 20 des images avec une fréquence de transmission d'image Fₜ variable, inférieure ou égale à la fréquence d'acquisition d'image Fᵢ.

La caméra 10 transmet uniquement les images de référence ce qui réduit le débit de données moyen sur la liaison 30. En conséquence, l'interface d'entrée/sortie 18 de la caméra 10 est moins sollicitée. Un gain en termes de consommation électrique de la caméra est par conséquent réalisé.

Lorsque le ratio R entre la fréquence Fₜ et la fréquence Fᵢ est bien inférieur à l'unité, on se trouve dans une situation favorable, puisque le débit de données est bas et que le gain est par conséquent élevé. Cette situation se rencontre lors d'un déplacement normal du dispositif équipé du système de vision par ordinateur 1 : arrêt, translation, faible rotation.

Lorsque le ratio R est proche de l'unité, on se trouve dans une situation moins favorable, puisque le débit de données n'est que faiblement réduit par la mise en œuvre de l'invention. Une telle situation se rencontre lors de mouvements brusques du dispositif porteur : rotations importantes par exemple.

Les données finalement transmises par la caméra sont les données que l'on peut considérer comme importantes au sens où ce sont celles nécessaires au processeur 24 pour réaliser les traitements de haut-niveau d'égo-localisation et ceci avec une bonne qualité.

Dans une variante de réalisation, le critère mis en œuvre par le quatrième bloc 48 est ajustable. Il peut être ajusté manuellement par l'utilisateur (par exemple par un bouton de réglage prévu sur la caméra). Mais, de manière particulièrement avantageuse, il est ajusté automatiquement par le calculateur 20. Par exemple, lorsque la qualité de l'égo-localisation est insuffisante, le calculateur peut transmettre une commande de réglage Cmd (figure 1), via la liaison 30, à la caméra. Lors de la réception de cette commande de réglage le critère du bloc 48 est ajusté en conformité. Par exemple, la valeur du nombre d'éléments caractéristiques suivis depuis la dernière image de référence est modifiée. Par exemple, ce nombre est augmenté de manière à augmenter la fréquence de transmission des images de référence. Le processeur 24 disposant de plus d'images de référence peut alors améliorer la qualité de la capture des mouvements de la caméra.

La caméra venant d'être présentée permet de découpler la cadence d'acquisition d'image et la cadence de transmission d'images, afin de réduire le débit de données en sortie de la caméra par rapport au débit de données acquises par la caméra.

Cela permet de réduire la quantité de données à transmettre en sortie de la caméra. Sachant que la consommation énergétique de l'interface d'une caméra constitue une part importante de la consommation totale de cette caméra, la présente invention permet, en limitant l'usage de l'interface, de réduire la consommation de la caméra et par conséquent celle du système de vision embarquant cette caméra. Il a notamment été vérifié, dans diverses implémentations, que le surcoût en consommation du dispositif de calcul intégré dans la caméra est plus faible que le gain fait sur l'interface d'entrée/sortie de la caméra. La mise en œuvre de la présente invention permet donc un gain d'énergie appréciable côté dispositif de capture d'images.

Ce gain sur la consommation ne se fait pas au détriment de la fonctionnalité d'ego-localisation puisque l'on conserve un suivi de qualité élevée. Ceci est en particulier dû au fait que les traitements de bas-niveau de l'égo-localisation sont réalisés en amont, à proximité du capteur, à la fréquence d'acquisition d'image Fᵢ.

Eventuellement, on peut réallouer ce gain sur la consommation de l'interface d'entrée/sortie, à l'augmentation de la qualité du suivi par le module de suivi et/ou à l'exploitation de capteurs d'image de meilleure qualité, comme des capteurs plus rapides et/ou à plus haute résolution.

La caméra selon l'invention permet d'extraire les informations géométriques de la scène observée, avec une cadence élevée, une latence faible, et une qualité élevée, tout en maintenant une consommation d'énergie très faible.

De plus, elle impacte positivement le reste du système de vision par ordinateur.

En effet, le calculateur qui reçoit le flux de données de la caméra est soulagé en termes d'utilisation de ses interfaces, de sa mémoire et des processus requis pour gérer le flux de données entrant.

Le processeur reçoit une quantité de données moindre. Il n'est plus contraint de traiter l'intégralité du flux de données à haute fréquence (c'est-à-dire la fréquence Fᵢ). Ce qui permet de limiter les usages de sa mémoire cache, de ne plus avoir à réaliser les traitements de bas niveau de suivi et donc de libérer du temps CPU. Tout ceci se traduit par des gains supplémentaires en termes de consommation.

Le processeur reçoit les images clefs, c'est-à-dire les informations a priori les plus utiles pour les traitements haut-niveau pour l'égo-localisation. Le temps de calcul libéré peut être utilisé pour la mise en œuvre d'algorithmes plus complexes ou de nouvelles fonctionnalités. Cela peut permettre d'améliorer les performances du système de vision par ordinateur, par exemple dans le cadre d'une application mettant en œuvre le suivi de structures géométriques.

L'invention trouve une application dans les dispositifs mobiles légers avec ego-localisation par vision, types casque ou des lunettes de réalité augmentée ou de réalité mixte, drones, robots mobiles, ou encore un dispositif de vidéosurveillance domotique, où les besoins en capture d'images sont très différents selon les phases de déplacements du dispositif.

## Revendications

1. Caméra (10) **caractérisée en ce qu'**elle comporte :
- un capteur optique (12), capable d'acquérir une séquence d'images, avec une fréquence d'acquisition d'image (Fi) prédéfinie et constante ;
- un module de suivi (14), capable de traiter à la volée chaque image acquise de la séquence d'images pour suivre un ensemble d'éléments caractéristiques depuis une image de référence et, lorsqu'un critère sur le nombre d'éléments caractéristiques suivis n'est plus respecté, en sélectionnant l'image courante en tant que nouvelle image de référence pour le suivi des images suivantes ;
- un module de transmission (16) capable de générer un flux de données, le module de transmission (16) étant commandé par le module de suivi (14) de manière à intégrer dans le flux de données uniquement les images de la séquence d'images qui ont été sélectionnées comme image de référence par le module de suivi (14) ; et,
- une interface d'entrée/sortie (18), propre à recevoir le flux de données généré par le module de transmission et destinée à transmettre ledit flux de données à un calculateur (20),
la caméra (10) transmettant des images avec une fréquence de transmission d'image (Fₜ) variable, inférieure ou égale à la fréquence d'acquisition d'image (Fᵢ).

2. Caméra selon la revendication 1, dans lequel le module de suivi (14) est propre à générer un indicateur (Id_{KF}) pour chaque image, indicatif de si oui ou non ladite image est une image de référence, et à transmettre ledit indicateur au module de transmission, le module de transmission filtrant les images de la séquence d'images en fonction de la valeur de l'indicateur pour ne conserver que les images sélectionnées comme images de référence.

3. Caméra selon la revendication 1 ou la revendication 2, dans laquelle le traitement par le module de suivi (14) d'une image acquise consiste, en outre, à calculer une signature pour chaque élément caractéristique détecté dans l'image acquise.

4. Caméra selon la revendication 3, dans laquelle le module de suivi (14) génère, pour chaque image acquise, une liste de signatures (L₂) comportant les signatures des éléments caractéristiques détectées dans ladite image acquise et applique ladite liste de signatures en entrée du module de transmission (16), le module de transmission (16) étant capable d'intégrer, dans le flux de données, la liste de signatures pour chaque image acquise.

5. Caméra selon la revendication 3, dans laquelle le module de suivi (14) génère, pour chaque image acquise, une liste de signatures (L₂) comportant les signatures des éléments caractéristiques détectés dans ladite image acquise et applique ladite liste de signatures en entrée du module de transmission (16), le module de transmission (16) étant capable d'intégrer, dans le flux de données, uniquement la liste de signatures des images de la séquence d'images qui ont été sélectionnées comme image de référence par le module de suivi (14).

6. Caméra (10) selon l'une quelconque des revendications précédentes, dans laquelle le module de suivi (14) génère, pour chaque image acquise, une liste de suivi (L₃) comportant les éléments caractéristiques détectées dans l'image courante et leur appariement éventuel à un élément caractéristique d'une image précédente, et applique ladite liste de suivi en entrée du module de transmission (16), le module de transmission (16) étant capable d'intégrer, dans le flux de données, la liste de suivi pour chaque image acquise.

7. Caméra selon la revendication 6, dans laquelle, le traitement par le module de suivi (14) d'une image acquise consistant, en outre, à calculer une signature pour chaque élément caractéristique détecté dans l'image acquise, l'appariement des éléments caractéristiques de l'image courante avec des éléments caractéristiques d'une image précédente s'effectue en tenant compte des signatures des éléments caractéristiques de l'image courante et des signatures des éléments caractéristiques de l'image précédente.

8. Caméra selon l'une quelconque des revendications précédentes, dans laquelle l'interface d'entrée/sortie (18) permet d'établir une liaison sans fil ou une liaison filaire avec le calculateur (20).

9. Caméra selon l'une quelconque des revendications précédentes, dans laquelle le module de suivi (14) et/ou le module de transmission (16) est intégré à un accélérateur matériel, de préférence un circuit intégré dédié.

10. Caméra selon l'une quelconque des revendications précédentes, dans laquelle le critère sur le nombre d'éléments caractéristiques est ajustable, de préférence lors de la réception d'une commande (Cmd) émise par le calculateur (20).

11. Système de vision par ordinateur (1) comportant une caméra et un calculateur (20), reliés l'un à l'autre par une liaison (30), sans-fil ou filaire, **caractérisé en ce que** la caméra est une caméra (10) conforme à l'une quelconque des revendications 1 à 10.

12. Flux de données entre une caméra (10) et un calculateur (20) dans un système de vision par ordinateur (1) selon la revendication 11, le flux de données étant subdivisé en pas de temps, la durée d'un pas de temps correspondant à la période d'acquisition d'images par le capteur optique (12) de la caméra, chaque pas de temps correspondant à une image acquise, le flux de données pour un pas de temps comportant les données de l'image acquise correspondante, mais uniquement lorsque ladite image est une image de référence telle que déterminée par le module de suivi (14).

13. Flux de données selon la revendication 12, dans lequel les données du flux de données pour un pas de temps comporte la liste de signatures (L₂) des signatures des éléments caractéristiques de l'image acquise correspondante, mais uniquement lorsque ladite image est une image de référence.

14. Flux de données selon la revendication 12, dans lequel les données du flux de données pour un pas de temps comporte la liste de signatures (L₂) des signatures des éléments caractéristiques de l'image acquise correspondante et/ou la liste de suivi (L₃) des éléments caractéristiques de l'image acquise correspondante.

15. Flux de données selon l'une quelconque des revendications 12 à 14, dans lequel les données du flux de données pour un pas de temps comporte la liste de suivi (L₃) des éléments caractéristiques de l'image acquise correspondante.
